(19) **Europäisches Patentamt European Patent Office Office européen des brevets**

(11) **EP 3 229 300 B1**

(12) **FASCICULE DE BREVET EUROPEEN**

(45) Date de publication et mention de la délivrance du brevet:
**03.04.2019 Bulletin 2019/14**

(51) Int Cl.:
*H01M 6/40* *(2006.01)*  *H01M 10/04* *(2006.01)*
*H01M 10/48* *(2006.01)*  *H01M 10/42* *(2006.01)*
*H01M 10/0562* *(2010.01)*  *H01M 10/44* *(2006.01)*
*H02J 7/00* *(2006.01)*

(21) Numéro de dépôt: **17165134.2**

(22) Date de dépôt: **05.04.2017**

(54) **DISPOSITIF ÉLECTROCHIMIQUE, TEL QU'UNE MICROBATTERIE, ET SON PROCÉDÉ DE RÉALISATION**

ELEKTROCHEMISCHES GERÄT, SOLCHER MIKROBATTERIE UND VERFAHREN ZUR HERSTELLUNG

ELECTROCHEMICAL DEVICE, SUCH AS A MICROBATTERY, AND METHOD FOR PRODUCING THE SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.04.2016 FR 1653082**

(43) Date de publication de la demande:
**11.10.2017 Bulletin 2017/41**

(73) Titulaire: **Commissariat à l'Energie Atomique et aux Energies Alternatives**
**75015 Paris (FR)**

(72) Inventeurs:
• **Dubarry, Christophe**
  **38640 Claix (FR)**
• **SALOT, Raphaël**
  **38250 Lans-en-Vercors (FR)**

(74) Mandataire: **Talbot, Alexandre et al**
**Cabinet Hecké**
**28 Cours Jean Jaurès**
**38000 Grenoble (FR)**

(56) Documents cités:
**JP-A- 2014 013 736  US-A1- 2009 208 815**

## Description

### Domaine technique de l'invention

L'invention est relative à un dispositif électrochimique, tel qu'une microbatterie, et à son procédé de réalisation.

### État de la technique

Les microbatteries sont définies comme étant des générateurs électrochimiques tout solide formés par un empilement de couches minces qui comporte au moins deux électrodes (positive et négative) séparées par un électrolyte. Ces microbatteries permettent notamment d'adapter les sources d'énergie aux nouvelles applications nomades qui sont proposées régulièrement et qui intègrent des microcircuits électroniques.

L'électrode positive est formée dans un matériau ayant une bonne conductivité ionique, par exemple l'oxysulfure de titane (TiOS) ou un oxyde de métal lithié, comme $LiCoO_2$, $LiNiO_2$, $LiMn_2O_4$.

L'électrolyte est un isolant électrique ayant une forte conductivité ionique tel que l'oxynitrure de lithium et de phosphore (LiPON), $LiNbO_3$, NaSiCON.

L'électrode négative est constituée de lithium métallique ou d'un matériau lithié ou d'un métal. Les microbatteries comprennent en outre des collecteurs de courant métalliques, par exemple, en platine ou tungstène.

La fabrication d'une microbatterie consiste à déposer successivement plusieurs couches minces. Le dépôt peut être réalisé sous vide. Les couches sont structurées de différentes façons, par exemple au moyen d'un masque mécanique. Cette technique est appelée « shadow masking » selon la terminologie anglo-saxonne. Un dépôt de type « dépôt physique en phase vapeur » ou PVD peut être réalisé à travers un masque présentant des évidements afin de former des batteries de taille centimétrique.

Pour réaliser des batteries plus petites, il est avantageux d'utiliser les techniques conventionnelles du semi-conducteur. Les documents FR 3009136, WO 01/73864 et US 2008/032236 décrivent des méthodes de fabrication de batteries monolithiques.

Il a été constaté que les électrolytes précités voient leurs performances électriques évoluer en fonction de leur température. En règle générale, la conductivité de l'électrolyte augmente lorsque la température augmente.

Il apparaît que la température de fonctionnement a une influence non négligeable sur les propriétés électriques de la batterie. De manière à éviter une détérioration accidentelle ou accélérée de la batterie, la température de la batterie doit être mesurée afin de prendre les dispositions nécessaires.

Le document EP 1115172 propose un procédé de mesure de la température associé à des moyens d'uniformisation de la température car les performances des batteries évoluent avec la température. Des températures de fonctionnement trop basses ou trop élevées peuvent détériorer les batteries. Le document EP 2631966 indique également que des températures extrêmes sont préjudiciables au bon fonctionnement des batteries et que l'utilisation d'un fluide caloporteur est particulièrement avantageux pour réaliser la régulation thermique.

Le document EP 0913877 propose de mesurer la température d'un groupe de batteries encapsulées. Le document propose de réaliser une régulation thermique et de définir des consignes de sécurité en fonction de la température de fonctionnement des batteries. La mesure de température est utilisée pour détecter la fin de la charge ou l'occurrence d'un disfonctionnement dans le dispositif de refroidissement associé.

Le document DE 10056972 propose une disposition particulière des capteurs de température de manière à déterminer la température de l'enveloppe externe de la batterie.

Le document JP2014013736 traite d'une méthode pour détecter la détérioration d'une batterie en analysant la résistance de charge $R_C$ et la résistance de décharge $R_D$. Ce document propose de mesurer la résistance de réaction de la batterie tout solide lors des opérations de charge et de décharge. Lors de la mesure de la résistance, une tension est appliquée entre la plaque supérieure et la plaque inférieure de sorte qu'un courant traverse l'empilement formé par la couche d'électrode positive, la couche d'électrolyte et la couche d'électrolyte négative.

Le document US 2009/208815 traite d'un système de gestion de la batterie. Le système de gestion possède un élément à résistance variable, par exemple une thermistance qui peut être disposée en contact avec une cellule de la batterie ou elle fait partie d'une borne d'une cellule. La résistance variable peut avoir une température qui est similaire à celle de la cellule. Il est alors possible d'approximer la température de la cellule au moyen de la résistance variable.

Cependant, il apparaît que les solutions proposées dans l'art antérieur ne permettent pas de résoudre complètement les problématiques de dégradation des performances de la batterie.

### Objet de l'invention

L'invention a pour but de remédier aux inconvénients de l'art antérieur et, en particulier, de proposer un dispositif électrochimique dont la température est mesurée plus précisément.

On tend à atteindre cet objet par un dispositif électrochimique, comportant un premier empilement de couches minces solides formées sur un substrat, ledit premier empilement formant une batterie et comprenant:

- une première électrode et une deuxième électrode séparées par une première couche d'électrolyte électroniquement isolante et ioniquement conductrice,

- un premier collecteur de courant en contact avec la première électrode,
- un deuxième collecteur de courant en contact avec la deuxième électrode, le premier collecteur de courant et le deuxième collecteur de courant étant isolés électroniquement par la première couche d'électrolyte.

Il est particulièrement avantageux de prévoir que le dispositif électrochimique comporte un deuxième empilement différent du premier empilement et forme un thermomètre, ledit deuxième empilement comprenant :

- un troisième collecteur de courant et un quatrième collecteur de courant,
- une couche résistive comportant une deuxième couche d'électrolyte en contact direct avec le troisième collecteur de courant et le quatrième collecteur de courant pour connecter électriquement le troisième collecteur de courant au quatrième collecteur de courant, la deuxième couche d'électrolyte étant dissociée ioniquement de la première couche d'électrolyte,

Il est particulièrement avantageux de prévoir que le dispositif électrochimique comporte un circuit de commande configuré pour mesurer la résistance de la couche résistive.

Dans un mode de réalisation particulier, le circuit de commande est configuré pour mesurer la résistance de la couche résistive et pour adapter les conditions de charge et/ou de décharge de la batterie en fonction de la valeur de résistance mesurée. Il est alors possible d'avoir un dispositif électrochimique présentant une meilleure tenue dans le temps de ses performances électriques

Cet objet est également atteint par un procédé de réalisation d'un dispositif électrochimique comportant les étapes suivantes pour réaliser un premier empilement formant une batterie :

- former une première électrode et une deuxième électrode séparées par une couche d'électrolyte électroniquement isolante et ioniquement conductrice,
- former un premier collecteur de courant, le premier collecteur de courant étant connecté à la première électrode,
- former un deuxième collecteur de courant, le deuxième collecteur de courant étant connecté à la deuxième électrode, le premier collecteur de courant et le deuxième collecteur de courant étant isolés électroniquement par la première couche d'électrolyte.

Il est avantageux de prévoir que le procédé comporte la formation d'un deuxième empilement distinct du premier empilement pour former un thermomètre, le deuxième empilement étant formé au moyen des étapes suivantes :

- former une couche résistive dans une deuxième couche d'électrolyte,
- former des troisième et quatrième collecteurs de courant en contact avec la couche résistive et séparés par la couche résistive.

Il est avantageux de prévoir que le procédé comporte une étape visant à relier les troisième et quatrième collecteurs de courant à un circuit de commande configuré pour mesurer la résistance de la couche résistive.

## Description sommaire des dessins

D'autres avantages et caractéristiques ressortiront plus clairement de la description qui va suivre de modes particuliers de réalisation de l'invention donnés à titre d'exemples, non limitatifs, et représentés aux dessins annexés, dans lesquels :

- les figures 1 et 2 représentent, de manière schématique, en coupe, deux empilements de couches minces formant des batteries,
- les figures 3, 4, 5 et 6 représentent, de manière schématique et en coupe, des empilements de couches minces formant des thermomètres selon l'invention,
- les figures 7 et 8 représentent schématiquement, en vue de dessus, deux empilements de couches minces formant des thermomètres selon l'invention,
- la figure 9 représente en vue de dessus, de manière schématique, la réalisation d'un premier empilement formant une batterie et d'un deuxième empilement formant un thermomètre,
- la figure 10 représente en vue de dessus, de manière schématique, une variante de réalisation d'un premier empilement formant une batterie et d'un deuxième empilement formant un thermomètre,
- les figures 11 et 12 représentent l'évolution de la conductivité électrique de plusieurs électrolytes en fonction de l'inverse la température.

## Description d'un mode de réalisation préférentiel de l'invention

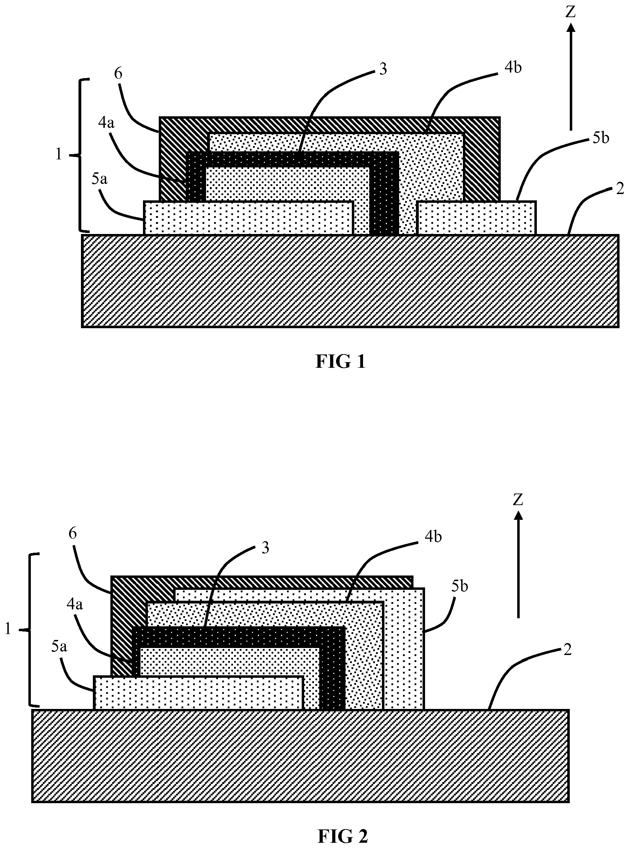

Comme illustré aux figures 1 et 2, le dispositif électrochimique comporte un premier empilement 1 de couches minces solides formé sur un substrat 2. Le premier empilement 1 forme une batterie, avantageusement une microbatterie et encore plus avantageusement une microbatterie tout solide.

Une microbatterie est un générateur électrochimique tout solide qui est avantageusement rechargeable. L'épaisseur d'une microbatterie est faible, par exem-

ple entre 30μm et 200μm. La microbatterie est réalisée sur un substrat 2 et elle occupe une surface comprise entre quelques μm² et quelques cm².

Dans un mode de réalisation avantageux, le substrat 2 est électriquement isolant. Le substrat 2 peut être réalisé dans un matériau isolant ou il peut comporter des couches électriquement conductrices recouvertes, en surface, par une couche électriquement isolante. La couche électriquement isolante peut être réalisée par une couche ou par un empilement de plusieurs couches. A titre d'exemple, la couche électriquement isolante est en oxyde de silicium.

Le substrat 2 est muni d'une première face et d'une seconde face. L'empilement est déposé sur la première face du substrat 2, c'est-à-dire sur la face électriquement isolante.

De manière avantageuse, le substrat 2 et préférentiellement la face électriquement isolante présentent des caractéristiques barrières. De préférence, le substrat et/ou la face électriquement isolante sont une barrière à la diffusion du lithium.

La batterie comporte une première couche électrolytique 3 qui sépare les deux électrodes de la batterie 4a et 4b. De cette manière, les électrodes 4a/4b sont isolées électriquement au moyen de la première couche d'électrolyte 3. Les électrodes 4a et 4b sont formées par des matériaux électriquement conducteurs. Au moins une des électrodes est formée par un matériau qui présente des propriétés électrochimiques par rapport à la couche d'électrolyte 3, c'est-à-dire qui est électrochimiquement actif. Les deux électrodes 4a et 4b sont séparées par l'électrolyte 3 qui est conducteur ioniquement et isolant électriquement.

La batterie comporte également des premier et deuxième collecteurs de courant 5a et 5b. Le premier collecteur de courant 5a est connecté électriquement à la première électrode 4a. Le deuxième collecteur de courant 5b est connecté électriquement à la deuxième électrode 4b. Les premier et deuxième collecteurs de courant 5a et 5b sont isolés électriquement et notamment au moyen de la couche d'électrolyte 3 qui est un matériau résistif ioniquement mais pas électroniquement.

Les matériaux formant les collecteurs de courant 5a et 5b sont électriquement conducteurs et sont dépourvus de propriété électrochimique vis-à-vis de la couche d'électrolyte 3. Les matériaux formant les collecteurs de courant 5a et 5b sont donc différents des matériaux formant les électrodes 4a et 4b. Les collecteurs de courant sont formés par des matériaux conducteurs électroniques et de préférence exclusivement en matériaux conducteurs électroniques. Les électrodes sont formées par des matériaux qui participent aux mécanismes électrochimiques de la batterie et notamment dans les phénomènes d'insertion et de déinsertion des ions Li, Na ou H.

En variante de réalisation, les collecteurs de courant 5a et 5b peuvent être formés dans des matériaux d'électrode. Ces matériaux peuvent être identiques ou différents des matériaux utilisés pour former les électrodes 4a et 4b.

Le premier empilement 1 peut également comporter une couche d'encapsulation 6 qui est électriquement isolante et qui possède des propriétés barrières afin de protéger la batterie de l'environnement extérieur. La couche d'encapsulation 6 vient complètement recouvrir l'empilement décrit ci-dessus en laissant éventuellement découvert une partie des collecteurs de courant 5a et 5b. De manière préférentielle, la couche d'encapsulation 6 est un isolant thermique ce qui permet de limiter la dissipation de chaleur en provenance de l'empilement. Ainsi, les composants encapsulés sont à une température plus uniforme. Les gradients thermiques sont réduits.

Dans le mode de réalisation illustré à la figure 1, le premier empilement comporte :

- les premier et deuxième collecteurs de courant 5a et 5b formés sur le substrat 2,
- la première électrode 4a en contact électrique avec le premier collecteur de courant 5a,
- la couche d'électrolyte 3 recouvrant la première électrode 4a et éventuellement le premier collecteur de courant 5a,
- la deuxième électrode 4b en contact avec la couche d'électrolyte 3 et séparée de la première électrode 4a par la couche d'électrolyte 3, la deuxième électrode 4b étant en contact électrique avec le deuxième collecteur de courant 5b,
- la couche d'encapsulation 6 recouvrant les deux collecteurs de courant 5a et 5b, les deux électrodes 4a et 4b et la couche d'électrolyte 3.

De manière avantageuse, dans le mode de réalisation illustré à la figure 2, le premier empilement 1 comprend successivement :

- un premier collecteur de courant 5a, recouvrant une partie du substrat 2,
- une première électrode 4a recouvrant au moins une partie du premier collecteur de courant 5a,
- une couche d'électrolyte 3 configurée pour recouvrir au moins une partie de la première électrode 4a,
- une seconde électrode 4b recouvrant au moins partiellement la couche d'électrolyte 3 et éventuellement agencée pour recouvrir le premier collecteur de courant 5a,
- un second collecteur de courant 5b recouvrant au moins partiellement la seconde électrode 4b, de préférence recouvrant totalement la seconde électrode 4b,
- une couche d'encapsulation 6 recouvrant au moins partiellement les couches déposées en laissant éventuellement libre une partie des collecteurs de courant 5a et 5b.

Le substrat 2 peut être un substrat rigide ou un substrat souple. Il est avantageux d'avoir un substrat 2 dont l'épaisseur est comprise entre 25 et 1000 $\mu$m. Le substrat 2 peut être formé par un ou plusieurs matériaux polymères par exemple en Polytéréphtalate d'éthylène (PET), en polyester ou en Polynaphtalate d'éthylène (PEN). Il est également possible de former le substrat 2 en matériau inorganique, par exemple en verre, en silice, en saphir, ou en métaux. Si le substrat 2 est un substrat métallique, il est possible d'utiliser l'acier inoxydable, le titane ou le nickel. Le substrat comporte alors une couche électriquement isolante pour éviter les courts-circuits.

De manière avantageuse, l'électrolyte 3 est un électrolyte solide. Encore plus avantageusement, l'électrolyte 3 peut être à base de lithium, par exemple, en nitrure de lithium ($Li_3N$), LiPON, $Li_2S-P_2S_5$, LiSiPON, ou encore en LiBON etc... Il est également possible d'utiliser d'autres électrolytes et préférentiellement à base de sodium comme par exemple, $Na_3PS_4$ ou NaSiCON ayant pour formule chimique $Na_{1+x}Zr_2Si_xP_{3-x}O_{12}$, avec $0 < x < 3$. Selon l'application recherchée, l'électrolyte 3 utilisé peut avoir un potentiel élevé ou plus faible.

Il est avantageux d'utiliser un électrolyte solide ayant une conductivité électronique inférieure à $10^{-12}$ voire $10^{-13}$S/cm car cela réduit la réactivité vis-à-vis des électrodes 4a et 4b. L'autodécharge est faible ce qui est un avantage non négligeable pour réaliser des batteries longues durées, c'est-à-dire que les batteries peuvent être stockées longtemps sans être utilisées. Cela permet également de bons rendements coulombiens ce qui est très avantageux lorsque la batterie est associée à un dispositif de récupération de l'énergie, par exemple une énergie renouvelable telle que l'énergie photovoltaïque ou éolienne.

L'électrolyte 3 solide peut être un électrolyte inorganique sous la forme d'un verre. Ce type de matériau est particulièrement avantageux, notamment lorsque l'électrolyte 3 est un sulfure ou un oxysulfure ou un verre céramique super-ionique de sulfure $Li_2S-P_2S_5$, car la conductivité des ions $Li^+$ est comparable à celle des électrolytes liquides. Des résultats semblables sont obtenus pour les batteries au sodium et par exemple au moyen d'un électrolyte en $Na_3PS_4$.

Dans un mode de réalisation avantageux, l'électrolyte 3 a une épaisseur comprise entre 0,5 $\mu$m et 10 $\mu$m.

La première électrode 4a ou la deuxième électrode 4b est une électrode positive. L'électrode positive est à insertion cationique ou protonique pour insérer par exemple $Na^+$, $Li^+$ ou $H^+$. Pour former l'électrode positive, il est possible d'utiliser les matériaux suivants : $LiCoO_2$, $V_2O_5$, $TiS_2$, $LiMn_2O_4$, $NaMnO_2$ ou $NaCoO_2$.

L'autre électrode 4b ou 4a est une électrode négative. Le matériau utilisé pour former l'électrode négative dépend du type de batterie considérée, c'est-à-dire du type d'électrolyte 3 utilisé. La batterie peut être de type lithium métallique. Elle peut également être de type lithium-ion avec des électrodes en alliages d'insertion choisis par exemple parmi SnLi, SiLi, GeLi. Il est encore possible de réaliser une batterie de type lithium-free et dans ce cas les électrodes 4a et/ou 4b sont non alliées. L'électrode négative peut être réalisée dans un matériau non électrochimiquement actif, par exemple dans un matériau apte à former un collecteur de courant, par exemple en cuivre. Il peut en être de même pour les batteries à base de sodium.

Afin d'appliquer une tension électrique homogène sur l'empilement 1 et donc à l'intérieur de la batterie, il est avantageux de prévoir un premier collecteur de courant 5a connecté à la première électrode 4a et un deuxième collecteur de courant 5b connecté à la deuxième électrode 4b. Dans le mode de réalisation de la figure 2, les deux collecteurs de courant 5a et 5b sont séparés par la première électrode 4a, la couche d'électrolyte 3 et la deuxième électrode 4b. Il est également avantageux de limiter voire d'éliminer la connexion directe entre l'électrolyte 3 et chacun des collecteurs de courant 5a et 5b.

Les collecteurs de courant 5a et 5b peuvent être formés par des oxydes transparents conducteurs, par exemple de l'oxyde de zinc aluminium, de l'oxyde d'indium-étain. Il est encore possible de réaliser les collecteurs de courant 5a et 5b en métal ou alliage métallique, par exemple en Cu, Ni, Ti, Mo, Pt, W ou en alliage de $WSi_X$. Il est également possible de réaliser les collecteurs de courant en graphène.

Le premier et/ou le deuxième collecteurs de courant 5a et 5b ont avantageusement une épaisseur comprise entre 0,1 $\mu$m et 10 $\mu$m. De manière encore plus avantageuse, le premier et/ou le deuxième collecteurs de courant 5a et 5b ont une épaisseur inférieure à 1 $\mu$m. Dans un mode de réalisation préférentiel, le premier et/ou le deuxième collecteurs de courant 5a et 5b ont une épaisseur égale ou sensiblement égale à 200nm.

Il est particulièrement avantageux de mesurer la température de la batterie afin de pouvoir définir, au mieux, ses conditions de charge et/ou de décharge et/ou pour déterminer son état de charge le cas échéant.

De nombreuses approches se proposent de rapporter un thermomètre externe à proximité de la batterie. Les documents EP 0913877 et EP 0902494 décrivent la réalisation d'une cavité dans les parois d'une batterie à électrolyte liquide pour approcher un thermomètre au plus près des réactions exothermiques de la batterie.

Cette solution n'est pas intéressante car elle implique l'ajout d'un thermomètre de grandes dimensions à côté de la batterie. Si la batterie est une microbatterie, c'est-à-dire une batterie dont l'épaisseur est inférieure à 1mm, les dimensions du thermomètre sont importantes par rapport à celles de la microbatterie. Plus le thermomètre est volumineux en comparaison de la batterie et plus les performances thermiques de l'ensemble sont influencées par la masse du thermomètre. Le thermomètre peut introduire une masse thermique non négligeable ce qui peut être problématique lorsque la source de chaleur est formée par la batterie. Le thermomètre mesure une température qui est différente de celle de la microbatterie et plus particulièrement durant les phases transitoires.

Par ailleurs, ajouter un thermomètre a posteriori représente un risque important d'introduction de défauts ce qui peut détériorer la batterie déjà réalisée ou au moins réduire le rendement de fabrication des batteries. Il apparaît donc contre-productif de réaliser une batterie puis de lui adjoindre un thermomètre réalisé ailleurs dans une technologie différente.

Afin de conserver une densité d'intégration importante et/ou pour conserver des rendements de fabrication des batteries importants, les inventeurs proposent de réaliser un thermomètre à proximité immédiate de la batterie et plus particulièrement de réaliser un thermomètre à partir de certaines couches utilisées pour former des batteries. Ce choix de matériaux permet de réduire les contraintes physico-chimiques liées à l'ajout de nouveaux matériaux dans le processus de fabrication. Si les matériaux sont identiques entre le thermomètre et la batterie cela autorise également une réduction des étapes technologiques de fabrication. De manière avantageuse, le thermomètre se trouve à une distance inférieure à 2mm de la microbatterie. De manière encore plus avantageuse, la distance entre la microbatterie et le thermomètre est comprise entre $20\mu m$ et 2mm. Par distance, on entend la dimension la plus faible qui sépare le thermomètre et la batterie.

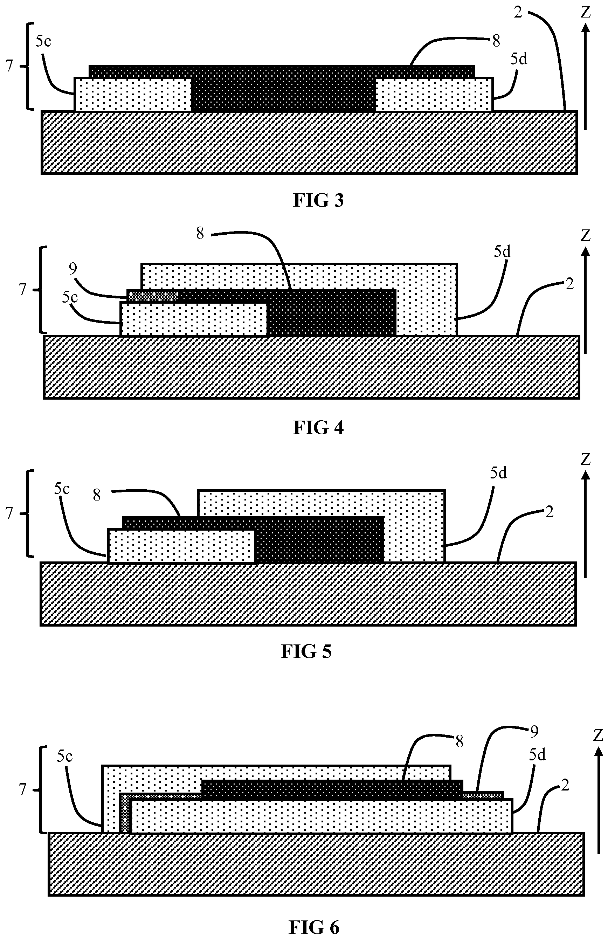

En plus du premier empilement 1, le dispositif électrochimique comporte un deuxième empilement 7 formant un thermomètre ou un capteur de température. Comme illustré aux figures 3, 4, 5, 6, 7, 8, 9 et 10, le deuxième empilement 7 est différent et avantageusement distinct du premier empilement 1. Les deux empilements sont décalés selon une direction Y perpendiculaire à la direction Z selon laquelle les couches du premier empilement 1 se superposent. Les deux empilements peuvent être décalés selon une direction parallèle à l'axe de la surface du substrat 2 sur lequel sont formés les empilements 1 et 7. Il est possible de prévoir que la microbatterie est placée sous le thermomètre ou sur le thermomètre. Il est alors avantageux d'isoler électriquement ces deux composants au moyen d'une couche isolante qui est avantageusement en $SiO_2$ ou $Al_2O_3$.

Ce deuxième empilement 7 comporte des troisième et quatrième collecteurs de courant 5c et 5d qui sont séparés électriquement par une couche résistive 8 formée par une deuxième couche d'électrolyte qui est avantageusement un électrolyte solide. La deuxième couche d'électrolyte est formée par un matériau électriquement isolant et ioniquement conducteur. Comme indiqué plus haut, les performances électriques (conductivité / résistivité) des électrolytes évoluent en fonction de la température. Ce deuxième empilement 7 est avantageusement dépourvu de matériau d'insertion cationique ou protonique afin d'éviter que le deuxième empilement fonctionne en tant que batterie. De manière avantageuse, le deuxième empilement 7 est dépourvu d'un matériau d'insertion cationique ou protonique qui est en contact direct avec l'électrolyte et avec le collecteur de courant 5c ou 5d, c'est-à-dire que le deuxième empilement est dépourvu d'un matériau d'électrode positive en contact avec le troisième collecteur de courant et avec la deuxième couche d'électrolyte.

De manière préférentielle, le deuxième empilement est dépourvu d'un deuxième matériau d'électrode en contact avec le quatrième collecteur de courant 5d et la deuxième couche d'électrolyte.

Il est également avantageux de prévoir que le troisième collecteur de courant 5c est partiellement recouvert par la couche résistive 8 et que le quatrième collecteur de courant 5d recouvre partiellement la couche résistive 8 et le troisième collecteur de courant 5c. De manière préférentielle, le quatrième collecteur de courant 5d laisse découvert au moins une paroi latérale de la couche résistive 8 pour réduire les problèmes de court-circuit.

La résistance formée par la couche résistive 8 entre les troisième et quatrième collecteurs de courant 5c et 5d évolue avec la température et va permettre de suivre la température de la couche résistive 8. Cette évolution des performances électriques est utilisée ici de manière astucieuse pour former un thermomètre absolu, c'est-à-dire un thermomètre qui relie la température à une autre grandeur du système international, ici les performances électriques.

Le deuxième électrolyte formant la couche résistive 8 peut être identique ou différent du premier électrolyte 3 de la batterie.

Il est particulièrement avantageux de choisir un deuxième électrolyte qui présente une conductivité évoluant dans la gamme $10^{-3}$ - $10^{-7}$ S.cm$^{-1}$.

Les inventeurs ont observé que le volume d'électrolyte utilisé permet de définir au moins en partie la résolution du thermomètre. Il est avantageux de prévoir que le volume d'électrolyte est compris dans la gamme 5000 $\mu m^3$ - $2.10^8 \mu m^3$.

Il est particulièrement avantageux d'avoir une épaisseur de couche d'électrolyte comprise entre $0,5\mu m$ et $2\mu m$ afin d'avoir un thermomètre compact offrant une bonne résolution. Il est également avantageux de prévoir que la surface occupée par la couche d'électrolyte du thermomètre est comprise entre $10^{-4} cm^2$ et $1 cm^2$.

La mesure de la résistance de la couche résistive 8 permet de déterminer la conductivité de la couche résistive 8 et donc la température de cette couche. La mesure de la résistance peut être obtenue facilement en mesurant la tension qui existe entre les troisième et quatrième collecteurs de courant 5c et 5d, ainsi que la valeur de courant qui circule entre les troisième et quatrième collecteurs de courant 5c et 5d. Les dimensions de la couche 8 étant définies, la mesure des performances électriques de l'électrolyte peut se faire en mesurant soit la tension entre les deux collecteurs de courant, soit le courant qui circule entre les deux collecteurs de courant.

La dépendance en température peut être représentée sous la forme de l'équation suivante

$$TCR = \frac{(R_T - R_{ref})}{R_{ref}} * \frac{1}{\Delta T}$$

où

$R_{ref}$ représente la valeur de la résistance du film 8 à une température de référence,

$R_T$ représente la valeur de la résistance du film 8 à une température T,

$\Delta T$ représente la différence entre la température de référence et la température T par exemple en °C ou en K.

Les figures 3 à 6 représentent différentes variantes de réalisation d'un thermomètre.

La figure 3 illustre un mode de réalisation où les troisième et quatrième collecteurs de courant 5c et 5d sont formés avant la couche résistive 8. Les collecteurs 5c et 5d sont au moins partiellement recouverts par la couche résistive 8. En variante, les deux collecteurs peuvent être formés après la couche 8. Le mode de réalisation illustré à la figure 3 est particulièrement avantageux car il est simple à réaliser. Il est cependant avantageux de prévoir un recouvrement partiel du thermomètre par un matériau électriquement isolant tel que $SiO_2$ et $Al_2O_3$ afin d'éviter des courts-circuits lors des dépôts de couches postérieures.

Dans d'autres modes de réalisation avantageux illustrés aux figures 4, 5 et 6, le deuxième empilement 7 comporte successivement :

- un troisième collecteur de courant 5c recouvrant une partie du substrat 2,
- une couche résistive 8 formée par un électrolyte solide en contact avec le troisième collecteur de courant 5c, la couche résistive 8 recouvrant au moins partiellement le troisième collecteur de courant 5c,
- un quatrième collecteur de courant 5d recouvrant au moins partiellement la couche résistive 8, le quatrième collecteur de courant 5d étant séparé électriquement du troisième collecteur de courant 5c par la couche résistive 8.

De manière avantageuse, le quatrième collecteur de courant 5d laisse découvert une partie de la paroi supérieure de la couche résistive 8 pour réduire les problèmes de court-circuit.

Dans ces modes de réalisation, le deuxième empilement 7 comporte successivement, dans une direction traversant ledit deuxième empilement et le substrat 2 : le troisième collecteur de courant 5c, la couche résistive 8 et le quatrième collecteur de courant 5d.

Le troisième collecteur de courant 5c et/ou le quatrième collecteur de courant 5d peuvent être formés par les matériaux décrits précédemment pour les premier et deuxième collecteurs de courant 5a et 5b et ils peuvent être réalisés avec les mêmes épaisseurs.

Dans les modes de réalisation illustrés aux figures 4 et 6, une couche électriquement isolante 9 est utilisée, en plus de la couche résistive 8, pour séparer électriquement les collecteurs de courant 5c et 5d.

Utiliser l'évolution de la conductivité de la couche résistive 8 en fonction de la température est particulièrement avantageux en comparaison des autres techniques

Cette configuration est plus avantageuse qu'une structure comportant un ou plusieurs thermocouples et qui nécessite la mise en place d'une zone de référence où la température est connue ou contrôlée de manière à connaître la différence de température qui existe entre le la zone étudiée et la zone de référence.

Il est particulièrement avantageux de prévoir que les mêmes matériaux sont utilisés pour former la batterie et le thermomètre. Le thermomètre peut être représenté comme une batterie dépourvue des première et deuxième électrodes 4a et 4b.

De manière à mesurer la tension et/ou le courant entre les troisième et quatrième collecteurs de courant 5c et 5d, le dispositif comporte un capteur de tension et/ou un capteur de courant, par exemple un voltmètre et/ou un ampèremètre. Au moyen de ces informations, il est possible de calculer la résistance du film résistif 8 et d'en déduire la température.

A titre d'exemple, un thermomètre formé avec un plot d'électrolyte ayant une surface de 1cm et une épaisseur de $2\mu m$ permet d'obtenir une résistance d'environ 200 Ohm et une dérivé d'environ 2 Ohm/K ce qui est facile à mesurer pour suivre les évolutions de température.

Il est particulièrement avantageux de prévoir qu'une couche thermiquement isolante recouvre le premier empilement 1 et le deuxième empilement 7 afin d'éviter de trop grandes fuites de chaleur entre la batterie et le thermomètre. Lors de son fonctionnement, en charge ou en décharge, la batterie génère de la chaleur, elle est donc à une température différente de son environnement. Le thermomètre mesure la température du film résistif 8 et il devient possible d'en déduire la température de la batterie. En plaçant le thermomètre à proximité de la batterie et en mesurant directement ou indirectement la résistance du film résistif 8, il est possible d'en déduire la température de la batterie formée par le premier empilement 1.

Comme indiqué plus haut, ce suivi de la température de la batterie est facilité par l'utilisation d'une couche d'encapsulation thermiquement isolante. De manière avantageuse, la couche d'encapsulation thermiquement isolante présente une résistivité dans la gamme 1 à 2 $W.m^{-1}.K^{-1}$.

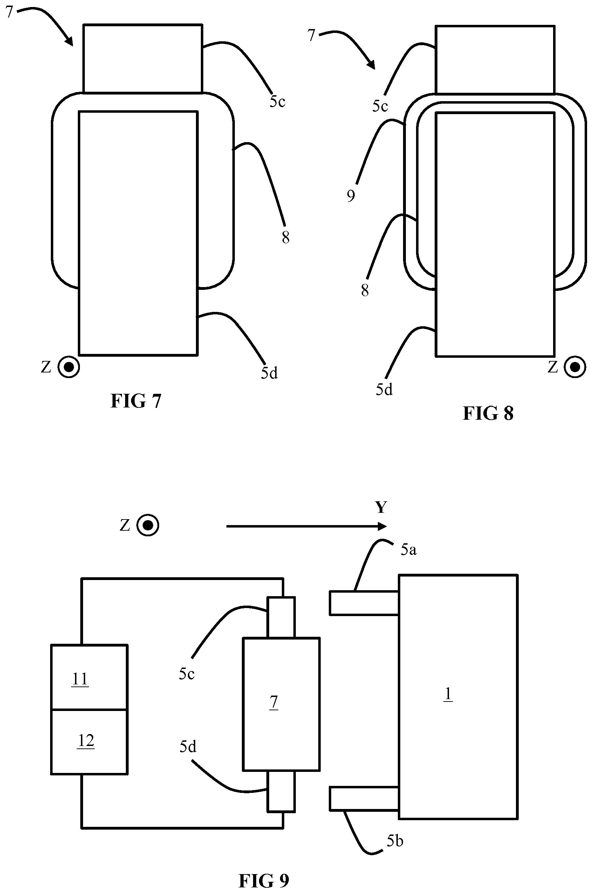

Comme illustré à la figure 9, les deux bornes du thermomètre sont connectées à un circuit de commande 11 qui est configuré pour mesurer les caractéristiques électriques du film résistif 8 et avantageusement la résistance du film, c'est-à-dire une grandeur électrique qui est représentative de la température mesurée. Le circuit de commande 11 peut fournir cette information à un utilisateur ou à un autre circuit qui va initier d'autres actions dépendantes de la température mesurée. Il est avantageux de prévoir que le circuit de commande est alimenté par la batterie pour gagner en compacité.

Le dispositif comporte au moins trois bornes distinctes électriquement, par exemple quatre bornes distinctes électriquement. La microbatterie possède deux bornes différentes formées avantageusement par le collecteur de courant positif et le collecteur de courant négatif. Le thermomètre possède également deux bornes distinctes pour pouvoir mesurer la résistance du film 8.

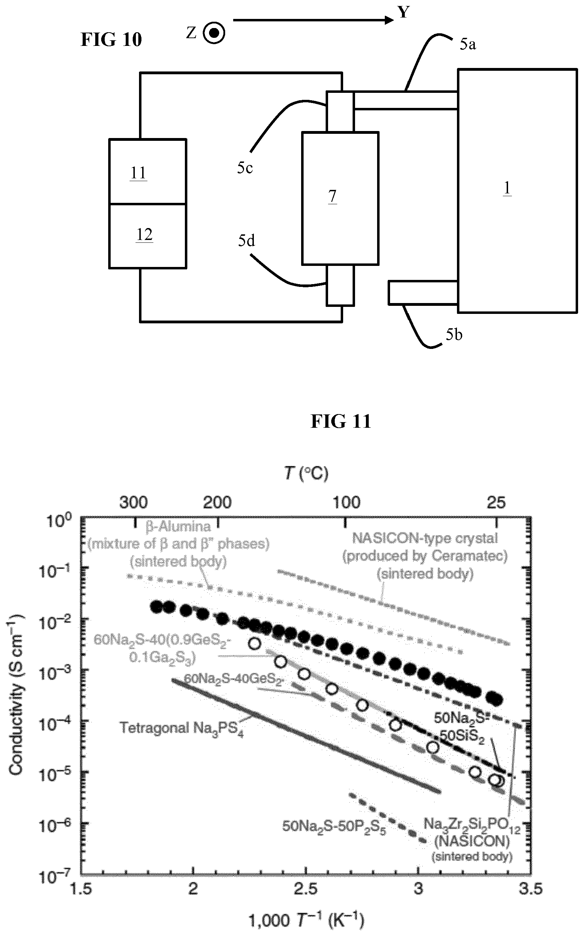

Dans un cas de figure, une des bornes de la microbatterie est commune avec une des bornes du thermomètre comme cela est illustré à la figure 10. Les deux autres collecteurs de courant peuvent être dissocié électroniquement, par exemple le deuxième et le quatrième collecteurs de courant. Dans un autre cas de figure illustré à la figure 9, les quatre bornes sont dissociées électriquement.

Dans un mode de réalisation particulier, le thermomètre est connecté à un circuit de commande 11 qui est configuré pour moduler les conditions de charge et/ou de décharge de la batterie, par exemple le courant et/ou la tension de charge ou de décharge, en fonction de la température mesurée. Le circuit de commande 11 peut comporter par exemple un processeur qui traite les différentes données reçues.

Selon une variante de réalisation de l'invention, les informations fournies par le thermomètre au circuit de commande 11 permettent de gérer le fonctionnement de la batterie en fonction de la température mesurée. Le circuit de commande 11 est configuré pour comparer la valeur mesurée à au moins un seuil pour autoriser ou bloquer la charge et/ou la décharge. De cette manière, lorsque le circuit de commande 11 détecte que la température mesurée atteint une valeur seuil qui pourrait endommager la batterie, le circuit de commande 11 peut arrêter la charge et/ou la décharge de la batterie. Il peut également modifier les conditions de charge et/ou de décharge en modulant la tension et/ou le courant. Il est possible d'utiliser plusieurs valeurs seuils.

De manière avantageuse, le circuit de commande 11 est configuré pour comparer la valeur mesurée à au moins un seuil pour autoriser ou bloquer la charge et/ou la décharge.

Selon une autre variante de l'invention, les informations fournies par le thermomètre permettent au circuit de commande 11 de connaître l'énergie et la puissance disponibles dans la batterie à tout instant. La capacité d'une batterie qui peut être de l'ordre de plusieurs mAh peut être recalculée en tenant compte de la température. L'énergie de la microbatterie est donnée par la formule :

$$E = Q(V - I.R)$$

Avec E l'énergie disponible dans la microbatterie,
Q la capacité de la batterie en Coulomb,
V la tension aux bornes de la microbatterie en Volt,
R la résistance interne de la microbatterie en Ohm,
I le courant circulant depuis ou à destination de la microbatterie en Ampère.

Comme indiqué plus haut, la capacité de la batterie dépend de sa résistance interne. Dès lors, avec l'évolution de la température, les caractéristiques électriques de l'électrolyte évoluent. Il est alors possible de suivre la résistance interne de la batterie. Au moyen de cette mesure de résistance interne, il est alors possible de recalculer la capacitance électrique de la batterie en Farad.

Il est également possible de suivre plus facilement une température de sécurité en suivant par exemple le paramètre RC qui représente une constante de temps caractéristique de la batterie. R est la résistance interne de la batterie et C est la capacité électrique de la batterie en Farad.

Les figures 7 et 8 illustrent, en vue de dessus, deux modes de réalisation d'un thermomètre en relation avec les modes de réalisation des figures 4, 5 et 6. Le mode de réalisation de la figure 7 illustre un empilement simple de couches. La couche résistive 8 vient recouvrir le collecteur de courant 5C. Le collecteur de courant 5D vient recouvrir la couche résistive 8. Dans le mode de réalisation de la figure 8, le film isolant 9 vient entourer le film résistif 8 ou déborder au delà du film résistif 8. Avantageusement, la couche résistive 8 recouvre partiellement une surface supérieure du troisième collecteur de courant 5c de manière à définir une zone dépourvue de recouvrement en forme d'anneau. Le quatrième collecteur de courant 5d recouvre complètement la couche résistive 8 et un film isolant 9 qui vient séparer les troisième et quatrième collecteurs de courant 5c et 5d. Selon les modes de réalisation, le film isolant 9 peut être déposé avant ou après le film résistif 8.

Dans un premier mode de réalisation illustré à la figure 9, le thermomètre est alimenté par une source de tension ou de courant 12 qui est différente du premier empilement 1. Par exemple, le thermomètre est alimenté par le circuit de commande 11 qui comporte la source de tension ou de courant 12.

Dans un deuxième mode de réalisation illustré à la figure 10, le thermomètre est alimenté par le premier empilement 1. La batterie délivre un courant qui traverse la couche résistive 8. De manière avantageuse, l'un des collecteurs de courant du premier empilement 1 est connecté électriquement avec l'un des collecteurs de courant du deuxième empilement 7. Il est également possible de prévoir que les deux collecteurs de courant de la batterie sont connectés électriquement aux deux collecteurs de courant du thermomètre, par exemple le premier collecteur avec le troisième collecteur et le deuxième collecteur avec le quatrième collecteur.

De manière particulièrement avantageuse, l'un des collecteurs de courant du premier empilement 1 est commun avec l'un des collecteurs de courant du deuxième empilement 7. L'autre collecteur de courant du premier empilement peut être séparé de l'autre collecteur de courant du deuxième empilement au moyen d'un interrupteur (non représenté). Dans l'exemple illustré, les collecteurs 5a et 5c sont communs. La batterie alimente le circuit de commande 11 qui est configuré pour mesurer la résistance du film résistif. Le circuit de commande 11 mesure la résistance au moyen de la tension aux bornes du film 8 et du courant traversant le film 8. Le circuit de commande 11 peut alors fournir la température mesurée ou une information représentative de la température mesurée.

Dans une variante de réalisation, le circuit de commande 11 n'est pas configuré pour moduler les conditions de charge ou de décharge de la batterie en fonction de la température. Dans ce cas de figure, il peut être avantageux d'utiliser le dispositif comme un thermomètre alimenté qui est apte à mesurer la température d'un élément tiers. Le circuit de commande 11 mesure les caractéristiques électriques du film résistif afin de fournir une information sur la température mesurée.

Cette configuration est particulièrement avantageuse car le procédé de fabrication peut être simplifié en comparaison de ce qui est réalisé dans l'art antérieur. Le premier et le troisième collecteurs de courant 5a et 5c peuvent être formés simultanément. Il est également possible de prévoir que le deuxième collecteur de courants est formé simultanément au quatrième collecteur de courants. Par exemple, les deux collecteurs de courant sont définis au moyen du même masque lors du dépôt ou lors d'une éventuelle gravure. Il est alors possible d'utiliser des règles de dessin conventionnelles pour placer le thermomètre au plus près de la batterie. Comme le thermomètre est placé à proximité immédiate de la batterie, la température de la batterie est mesurée plus justement par le thermomètre et/ou plus rapidement.

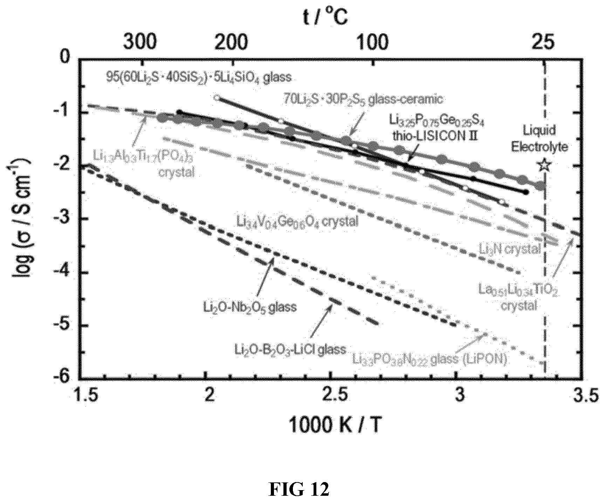

Les figures 11 et 12 représentent l'évolution de la conductivité de plusieurs électrolytes inorganiques en fonction de leur température. Chacun des électrolytes solides présentés sur ces figures peut être utilisé pour former la microbatterie et/ou le thermomètre.

Dans un premier exemple de réalisation, le substrat 2 est un substrat en verre ayant une épaisseur égale à 1mm. Le troisième collecteur de courant 5c est en tungstène et son épaisseur est égale à 1000nm. La couche résistive 8 est en LIPON d'une épaisseur égale à 2$\mu$m. Le quatrième collecteur de courant 5d est en tungstène et son épaisseur est égale à 250nm. Afin d'éviter un court-circuit entre le troisième et le quatrième collecteurs de courant 5c et 5d, une couche d'oxyde de silicium d'une épaisseur égale à 100nm est utilisée. Cet exemple de réalisation peut être intégré selon un des modes illustrés aux figures 3 et 5. Dans un deuxième exemple de réalisation, le substrat 2 est un substrat en titane ayant une épaisseur égale à 50$\mu$m. Le substrat 2 est recouvert d'une couche électriquement isolante 9 formée d'une couche d'oxyde de silicium dont l'épaisseur est égale à 100nm. Le troisième collecteur de courant 5c est en platine et son épaisseur est égale à 100nm. La couche résistive 8 est en LIPON d'une épaisseur égale à 2$\mu$m. Le quatrième collecteur de courant 5d est en platine et son épaisseur est égale à 100nm. Afin d'éviter un court-circuit entre le troisième et le quatrième collecteurs de courant 5c et 5d, une couche 9 d'oxyde de silicium d'une épaisseur égale à 100nm est utilisée. Cet exemple de réalisation peut être intégré selon un des modes illustrés aux figures 4 et 6.

Dans un troisième exemple de réalisation, le substrat 2 est un substrat en verre ayant une épaisseur égale à 50$\mu$m. Le substrat 2 est recouvert d'une couche électriquement isolante 9 formée d'une couche d'oxyde de silicium dont l'épaisseur est égale à 100nm. Le troisième collecteur de courant 5c est en platine et son épaisseur est égale à 250nm. La couche résistive 8 est en LIPON d'une épaisseur égale à 2$\mu$m. Le quatrième collecteur de courant 5d est en platine et son épaisseur est égale à 250nm. Cet exemple de réalisation peut être intégré selon un des modes illustrés aux figures 3 et 5.

Dans un quatrième exemple de réalisation, le substrat 2 est un substrat en verre ayant une épaisseur égale à 500$\mu$m. Le troisième collecteur de courant 5c est en WSi$_X$ et son épaisseur est égale à 1000nm. La couche résistive 8 est en Li$_2$S_P$_2$S$_5$ d'une épaisseur égale à 2$\mu$m. Le quatrième collecteur de courant 5d est en WSi$_X$ et son épaisseur est égale à 1000nm. Cet exemple de réalisation peut être intégré selon un des modes illustrés aux figures 3 et 5.

Pour former le thermomètre, il suffit de former le troisième collecteur de courant 5c, le quatrième collecteur de courant 5d et la couche résistive 8. L'ordre des étapes importe peu tant que le troisième collecteur de courant 5c est mis en contact avec le quatrième collecteur de courant 5d uniquement au moyen de la couche résistive 8.

Pour former la batterie, il est avantageux former les premier et deuxième collecteurs de courant 5a et 5b, les deux électrodes 4a et 4b et la couche d'électrolyte 3. Là encore, l'ordre des étapes peut varier selon les modes de réalisation. Il est néanmoins nécessaire de s'assurer que les deux électrodes sont en contact direct avec la couche d'électrolyte 3 et que les deux électrode sont isolées électriquement l'une de l'autre. Les deux électrodes 4a et 4b sont néanmoins reliées au moyen de la couche d'électrolyte 3.

Selon les modes de réalisation, le thermomètre peut être formé avant, après ou simultanément à la batterie. Il est néanmoins avantageux qu'ils utilisent quelques étapes technologiques communes afin de limiter les coûts et de conserver de bonnes compatibilités physico-chimiques.

Plus particulièrement, une microbatterie 1 et un thermomètre 7 peuvent être réalisés avec un procédé comportant les étapes successives suivantes :

- fournir un substrat 2 recouvert par un premier collecteur de courant, le premier collecteur de courant étant au moins partiellement recouvert par un premier motif en premier matériau d'électrode, le premier motif formant la première électrode,
- déposer une couche d'électrolyte 3 de manière à recouvrir au moins partiellement le premier motif en premier matériau d'électrode,
- former un deuxième motif en deuxième matériau d'électrode sur la couche d'électrolyte 3 de manière à recouvrir au moins partiellement le premier motif, le deuxième motif étant séparé électriquement du premier motif par la couche d'électrolyte, le deuxième motif formant la deuxième électrode,
- déposer un deuxième collecteur de courant recouvrant le deuxième motif au-dessus de la zone couverte et recouvrant l'électrolyte au-dessus de la zone découverte.

Lors de la formation du premier collecteur de courant, il est également possible de former le troisième collecteur de courant et éventuellement le quatrième collecteur de courant.

Lors du dépôt de la couche d'électrolyte 3, cette couche peut être utilisée pour former la batterie et éventuellement la couche résistive 8. Les deux couches électrolyte sont formées simultanément.

Lors de la formation de la deuxième électrode 4b, il est avantageux de protéger le futur thermomètre pour éviter un dépôt du matériau catalytique sur la couche résistive 8.

Lors du dépôt du deuxième collecteur de courant, il est avantageux de réaliser le quatrième collecteur de courant. Il est également possible de réaliser les troisième et quatrième collecteurs de courant.

En variante, il est encore possible de réaliser le troisième collecteur de courant et/ou le quatrième collecteur de courant au moyen de deux dépôts de matériaux qui sont déposés au-dessus et en dessous de la couche résistive. Ces deux dépôts peuvent par exemple être réalisés lors de la formation du premier collecteur de courant et du deuxième collecteur de courant.

Le procédé comporte une ou plusieurs étapes de structuration des couches déposées de manière à former deux empilements distincts. Le deuxième empilement 7 étant avantageusement dépourvu du premier matériau d'électrode et du deuxième matériau d'électrode.

Dans un mode de réalisation, les différentes couches sont déposées à travers un masque comportant des évidements. De cette manière, les différentes couches peuvent former des motifs dès leur dépôt. Les deux empilements distincts sont formés au fur et à mesure.

En variante, les couches sont déposées de manière continue sur tout le substrat, selon une technique dite pleine plaque, puis elles sont gravées de manière à les mettre en forme. La gravure peut être réalisée par toute technique adaptée, par exemple par plasma au moyen d'un masque ou au moyen d'un faisceau laser. Les deux empilements sont formés en même temps mais ils sont dissociés au fur et à mesure des étapes de gravure.

Il est également possible de combiner ces deux modes de réalisation entre les différentes couches.

De manière plus particulière, le substrat 2 est fourni puis le premier matériau de collecteur de courant est déposé. Comme indiqué plus haut, selon les modes de réalisation utilisés, le premier matériau de collecteur de courant est déposé à travers un masque pour former le premier et le troisième collecteurs de courant. En variante, le premier matériau de collecteur de courant est déposé puis gravé pour former le premier et le troisième collecteurs de courant 5a et 5c.

Un premier motif en premier matériau d'électrode est formé sur le premier collecteur de courant 5a pour définir la première électrode 4a. Ce premier motif peut être formé par dépôt à travers un masque ou par dépôt puis gravure du premier matériau d'électrode. Selon les modes de réalisation, le premier motif peut recouvrir partiellement ou complètement le premier collecteur de courant 5a. Il est également possible de prévoir que le premier motif déborde au-delà du premier collecteur de courant 5a. Ce premier motif forme la première électrode 4a.

Le matériau d'électrolyte est ensuite déposé. Le matériau d'électrolyte peut recouvrir partiellement ou complètement le premier motif. Le matériau d'électrolyte va former la couche d'électrolyte 3 Il est également possible de prévoir que la couche d'électrolyte 3 déborde au-delà du premier motif par exemple pour recouvrir le premier collecteur de courant 5a ou éventuellement le substrat 2.

Le matériau d'électrolyte peut recouvrir partiellement ou complètement le troisième collecteur de courant 5c. Le matériau d'électrolyte peut déborder au-delà du troisième collecteur de courant pour recouvrir le substrat 2. En recouvrant le troisième collecteur de courant 5c, le matériau d'électrolyte peut former également la couche résistive 8.

Dans un mode de réalisation particulier, la couche d'électrolyte recouvre continûment le premier et le troisième collecteurs de courant 5a et 5c. La couche d'électrolyte peut être déposée à travers un masque ou être déposée sur tout le substrat puis éventuellement gravée.

Un deuxième motif en deuxième matériau d'électrode est ensuite formé. Ce deuxième motif peut être formé par dépôt à travers un masque ou par dépôt puis gravure du deuxième matériau d'électrode. Selon les modes de réalisation, le deuxième motif peut recouvrir partiellement ou complètement le premier motif. Il est également possible de prévoir que le deuxième motif déborde au-delà du premier collecteur de courant par exemple pour venir en contact avec le substrat 4. Le deuxième motif va avantageusement former la deuxième électrode 4b.

Le deuxième motif est séparé du premier motif par la couche d'électrolyte afin d'éviter les courts-circuits électriques.

Le deuxième matériau de collecteur de courant est déposé à travers un masque pour former le deuxième et le quatrième collecteurs de courant 5b et 5d. En variante, le deuxième matériau de collecteur de courant est déposé puis gravé pour former le deuxième et le quatrième collecteurs de courant 5b et 5d.

Le deuxième collecteur de courant 5b est déposé en contact avec le deuxième matériau d'électrode. Le quatrième collecteur de courant 5d est déposé en contact avec la couche électrolytique qui forme la couche résistive 8.

Le troisième collecteur de courant 5c, la deuxième couche électrolytique et le quatrième collecteur de courant 5d forment le thermomètre.

Dans les exemples illustrés, le plot d'électrolyte est le seul à connecter les deux collecteurs. En variante, il est possible de prévoir une seconde connexion avec un deuxième plot en matériau résistif qui peut également connecter les deux collecteurs. Les deux résistances sont montées en parallèle. Cette seconde connexion peut être réalisée dans le même matériau que la première connexion ou dans un matériau différent.

Si le matériau de la deuxième connexion est différent de celui de la couche résistive 8, la valeur de résistance de ce deuxième plot peut être indépendante de la température ou au contraire dépendante de la température. La résistance totale évoluant avec la température, la fonction de thermomètre est conservée.

La couche résistive 8 peut être formée par une couche d'un seul matériau d'électrolyte, mais il est également possible que la couche résistive 8 soit formée par plusieurs couches d'électrolytes identiques ou différents. Les couches d'électrolytes peuvent être montées en série et/ou en parallèle.

Il est encore possible d'associer la deuxième couche d'électrolyte avec une ou plusieurs couches conductrices électriquement. Par exemple, la couche d'électrolyte et au moins une couche conductrice sont montées en parallèle pour relier le troisième collecteur avec le quatrième collecteur. Ce mode de réalisation est moins avantageux que les précédents car la résistance qui existe entre les collecteurs est formée en partie par la couche conductrice et en partie par la couche résistive ce qui rend la mesure plus difficile. Il est également possible de prévoir que la couche résistive soit formée par la mise en série d'une ou plusieurs zones en matériau d'électrolyte avec une ou plusieurs zones de matériau électriquement conducteur. Une zone en matériau électriquement conducteur sépare deux zones consécutives en matériau d'électrolyte.

**Revendications**

1. Dispositif électrochimique, comportant un premier empilement (1) de couches minces solides formées sur un substrat (2), ledit premier empilement (1) formant une batterie et comprenant :

   - une première électrode (4a) et une deuxième électrode (4b) séparées par une première couche d'électrolyte (3) électroniquement isolante et ioniquement conductrice,
   - un premier collecteur de courant (5a) en contact avec la première électrode (4a),
   - un deuxième collecteur de courant (5b) en contact avec la deuxième électrode (4b), le premier collecteur de courant (5a) et le deuxième collecteur de courant (5b) étant isolés électroniquement par la première couche d'électrolyte (3),

   ledit dispositif comportant un deuxième empilement (7) différent du premier empilement (1) et formant un thermomètre, ledit deuxième empilement (7) comprenant :

   - un troisième collecteur de courant (5c) et un quatrième collecteur de courant (5d),
   - une couche résistive (8) comportant une deuxième couche d'électrolyte, la deuxième couche d'électrolyte étant en contact direct avec le troisième collecteur de courant (5c) et le quatrième collecteur de courant (5d) et séparant électriquement le troisième collecteur de courant (5c) du quatrième collecteur de courant (5d), la deuxième couche d'électrolyte étant dissociée ioniquement de la première couche d'électrolyte (3),

   ledit dispositif comportant un circuit de commande (11) configuré pour mesurer la résistance de la couche résistive (8).

2. Dispositif (1) selon la revendication 1, **caractérisé en ce que** le deuxième empilement (7) est dépourvu d'un matériau d'électrode positive en contact avec le troisième collecteur de courant (5c) et la deuxième couche d'électrolyte.

3. Dispositif (1) selon la revendication 2, **caractérisé en ce que** le deuxième empilement (7) est dépourvu d'un deuxième matériau d'électrode en contact avec le quatrième collecteur de courant (5d) et la deuxième couche d'électrolyte.

4. Dispositif (1) selon l'une quelconque des revendications 1 à 3, **caractérisé en ce que** le premier collecteur de courant (5a) est commun avec le troisième collecteur de courant (5c) et **en ce que** le deuxième collecteur de courant (5b) est électroniquement dissocié du quatrième collecteur de courant (5d).

**5.** Dispositif (1) selon l'une quelconque des revendications 1 à 4, **caractérisé en ce que** la première couche d'électrolyte (3) et la deuxième couche d'électrolyte sont formées par le même matériau d'électrolyte.

**6.** Dispositif (1) l'une quelconque des revendications 1 à 5, **caractérisé en ce que** le deuxième empilement (7) comporte successivement, dans une direction traversant ledit deuxième empilement et le substrat (2) : le troisième collecteur de courant (5c), la couche résistive (8) et le quatrième collecteur de courant (5d).

**7.** Dispositif (1) selon la revendication 6, **caractérisé en ce que** le troisième collecteur de courant (5c) est partiellement recouvert par la couche résistive (8) et **en ce que** le quatrième collecteur de courant (5d) recouvre partiellement la couche résistive (8) et le troisième collecteur de courant (5c), le quatrième collecteur de courant (5d) laissant découvert au moins une paroi latérale de la couche résistive (8).

**8.** Dispositif (1) selon la revendication 6, **caractérisé en ce que** le quatrième collecteur de courant (5d) laisse découvert une partie de la paroi supérieure de la couche résistive (8).

**9.** Dispositif (1) selon l'une quelconque des revendications précédentes, **caractérisé en ce que** la couche résistive (8) recouvre partiellement une surface supérieure du troisième collecteur de courant (5c) de manière à définir une zone dépourvue de recouvrement en forme d'anneau, et **en ce que** le quatrième collecteur de courant (5d) recouvrant complètement la couche résistive (8), un film isolant (9) séparant les troisième et quatrième collecteurs de courant (5c, 5d).

**10.** Dispositif (1) selon l'une quelconque des revendications précédentes, **caractérisé en ce que** le premier collecteur de courant (5a) est connecté électriquement au troisième collecteur de courant (5c).

**11.** Dispositif (1) selon l'une quelconque des revendications 1 à 3, **caractérisé en ce que** le deuxième collecteur de courant (5b) est connecté au quatrième collecteur de courant (5d).

**12.** Dispositif (1) selon les revendications 10 et 11, **caractérisé en ce que** la batterie délivre un courant traversant la couche résistive (8) du thermomètre.

**13.** Dispositif (1) selon l'une quelconque des revendications précédentes, **caractérisé en ce qu'**une couche thermiquement isolante recouvre le premier empilement et le deuxième empilement.

**14.** Dispositif (1) selon l'une quelconque des revendications précédentes, **caractérisé en ce que** le circuit de commande (11) est configuré pour comparer la valeur mesurée à au moins un seuil pour autoriser ou bloquer la charge et/ou la décharge.

**15.** Dispositif (1) selon l'une quelconque des revendications précédentes, **caractérisé en ce que** le circuit de commande (11) est alimenté par la batterie.

**16.** Procédé de réalisation d'un dispositif électrochimique, **caractérisé en ce qu'**il comporte les étapes suivantes pour réaliser un premier empilement (1) formant une batterie :

- former une première électrode (4a) et une deuxième électrode (4b) séparées par une couche d'électrolyte (3) électroniquement isolante et ioniquement conductrice,
- former un premier collecteur de courant (5a), le premier collecteur de courant (5a) étant connecté à la première électrode (4a),
- former un deuxième collecteur de courant (5b), le deuxième collecteur de courant (5b) étant connecté à la deuxième électrode (4b), le premier collecteur de courant (5a) et le deuxième collecteur de courant (5b) étant isolés électroniquement par la première couche d'électrolyte (3),

procédé **caractérisé en ce qu'**il comporte la formation d'un deuxième empilement (7) distinct du premier empilement (1) pour former un thermomètre, le deuxième empilement (7) étant formé au moyen des étapes suivantes :

- former une couche résistive (8) dans une deuxième couche d'électrolyte,
- former des troisième et quatrième collecteurs de courant (5c, 5d) en contact avec la couche résistive (8) et séparés par la couche résistive (8),

et **en ce qu'**il comporte relier les troisième et quatrième collecteurs de courant (5c, 5d) à un circuit de commande (11) configuré pour mesurer la résistance de la couche résistive (8).

**17.** Procédé selon la revendication 16, **caractérisé en ce que** la première couche d'électrolyte (3) est formée simultanément à la deuxième couche d'électrolyte.

**18.** Procédé selon l'une des revendications 16 et 17, **caractérisé en ce que** le premier collecteur de courant (5a) est formé simultanément au troisième collecteur de courant (5c).

19. Procédé selon la revendication 18, **caractérisé en ce que** le deuxième collecteur de courant (5b) est formé simultanément au quatrième collecteur de courant (5d).

**Patentansprüche**

1. Elektrochemische Vorrichtung, bestehend aus einer ersten Stapelung (1) von dünnen Festkörperschichten, die auf einem Substrat (2) gebildet sind, wobei diese erste Stapelung (1) eine Batterie bildet und umfasst:

    - eine erste Elektrode (4a) und eine zweite Elektrode (4b), die durch eine erste elektronisch isolierende und ionisch leitende Elektrolyt-Schicht (3) voneinander getrennt sind,
    - einen ersten Stromkollektor (5a), der mit der ersten Elektrode (4a) in Kontakt ist,
    - einen zweiten Stromkollektor (5b), der mit der zweiten Elektrode (4b) in Kontakt ist, wobei der erste Stromkollektor (5a) und der zweite Stromkollektor (5b) durch die erste Elektrolyt-Schicht (3) elektronisch isoliert sind,

    wobei die genannte Vorrichtung eine zweite Stapelung (7) enthält, die von der ersten Stapelung (1) unterschieden ist und einen Wärmemesser bildet, wobei diese zweite Stapelung (7) umfasst:

    - einen dritten Stromkollektor (5c) und einen vierten Stromkollektor (5d),
    - eine Widerstandsschicht (8), die eine zweite Elektrolyt-Schicht enthält, wobei sich die zweite Elektrolyt-Schicht in direktem Kontakt mit dem dritten Stromkollektor (5c) und dem vierten Stromkollektor (5d) befindet und den dritten Stromkollektor (5c) elektrisch von dem vierten Stromkollektor (5d) trennt, wobei die zweite Elektrolyt-Schicht ionisch von der ersten Elektrolyt-Schicht (3) getrennt ist,

    wobei die genannte Vorrichtung einen Steuerkreis (11) enthält, der dazu konfiguriert ist, den Widerstand der Widerstandsschicht (8) zu messen.

2. Vorrichtung (1) nach Anspruch 1,

    **dadurch gekennzeichnet,**
    **dass** die zweite Stapelung (7) nicht mit einem mit dem dritten Stromkollektor (5c) und der zweiten Elektrolyt-Schicht in Kontakt befindlichen Positiv-ElektrodenMaterial versehen ist.

3. Vorrichtung (1) nach Anspruch 2,

    **dadurch gekennzeichnet,**
    **dass** die zweite Stapelung (7) nicht mit einem mit dem vierten Stromkollektor (5d) und der zweiten Elektrolyt-Schicht in Kontakt befindlichen zweiten ElektrodenMaterial versehen ist.

4. Vorrichtung (1) nach einem der Ansprüche 1 bis 3,

    **dadurch gekennzeichnet,**
    **dass** der erste Stromkollektor (5a) mit dem dritten Stromkollektor (5c) zusammengeschlossen ist und dass der zweite Stromkollektor (5b) von dem vierten Stromkollektor (5d) elektronisch getrennt ist.

5. Vorrichtung (1) nach einem der Ansprüche 1 bis 4,

    **dadurch gekennzeichnet,**
    **dass** die erste Elektrolyt-Schicht (3) und die zweite Elektrolyt-Schicht aus dem gleichen Elektrolyt-Material gebildet sind.

6. Vorrichtung (1) nach einem der Ansprüche 1 bis 5,

    **dadurch gekennzeichnet,**
    **dass** die zweite Stapelung (7) in Querrichtung durch diese zweite Stapelung und das Substrat (2) aufeinander folgend aufweist: den dritten Stromkollektor (5c), die Widerstandsschicht (8) und den vierten Stromkollektor (5d).

7. Vorrichtung (1) nach Anspruch 6,

    **dadurch gekennzeichnet,**
    **dass** der dritte Stromkollektor (5c) von der Widerstandsschicht (8) teilweise bedeckt ist und dass der vierte Stromkollektor (5d) die Widerstandsschicht (8) und den dritten Stromkollektor (5c) teilweise bedeckt, wobei der vierte Stromkollektor (5d) zumindest eine Seitenwand der Widerstandsschicht (8) unbedeckt lässt.

8. Vorrichtung (1) nach Anspruch 6,

    **dadurch gekennzeichnet,**
    **dass** der vierte Stromkollektor (5d) einen Teil der oberen Wand der Widerstandsschicht (8) unbedeckt lässt.

9. Vorrichtung (1) nach einem der vorherigen Ansprüche,

    **dadurch gekennzeichnet,**
    **dass** die Widerstandsschicht (8) eine obere Oberfläche des dritten Stromkollektors (5c) teilweise bedeckt, dergestalt dass ein ringförmiger unbedeckter Bereich gebildet wird, und dass, wenn der vierte Stromkollektor (5d) die Widerstandsschicht (8) vollständig bedeckt, eine dünne Isolierschicht (9) den dritten und den vierten Stromkollektor (5c, 5d) voneinander trennt.

10. Vorrichtung (1) nach einem der vorherigen Ansprüche,

    **dadurch gekennzeichnet,**
    **dass** der erste Stromkollektor (5a) mit dem dritten Stromkollektor (5c) elektrisch verbunden ist.

11. Vorrichtung (1) nach einem der Ansprüche 1 bis 3,

    **dadurch gekennzeichnet,**
    **dass** der zweite Stromkollektor (5b) mit dem vierten Stromkollektor (5d) verbunden ist.

12. Vorrichtung (1) nach den Ansprüchen 10 und 11,

    **dadurch gekennzeichnet,**
    **dass** die Batterie einen Strom abgibt, der durch die Widerstandsschicht (8) des Wärmemessers fließt.

13. Vorrichtung (1) nach einem der vorherigen Ansprüche,

    **dadurch gekennzeichnet,**
    **dass** eine wärmeisolierende Schicht die erste Stapelung und die zweite Stapelung bedeckt.

14. Vorrichtung (1) nach einem der vorherigen Ansprüche,

    **dadurch gekennzeichnet,**
    **dass** der Steuerkreis (11) dazu konfiguriert ist, den gemessenen Wert mit mindestens einem Schwellenwert zu vergleichen, um das Laden und/oder Entladen zuzulassen oder zu sperren.

15. Vorrichtung (1) nach einem der vorherigen Ansprüche,

    **dadurch gekennzeichnet,**
    **dass** der Steuerkreis (11) von der Batterie gespeist wird.

16. Verfahren zur Herstellung einer elektrochemische Vorrichtung,

    **dadurch gekennzeichnet,**
    **dass** es die folgenden Verfahrensschritte aufweist, um eine erste Stapelung (1) herzustellen, die eine Batterie bildet:

    - Bilden einer ersten Elektrode (4a) und einer zweiten Elektrode (4b), die durch eine elektronisch isolierende und ionisch leitende Elektrolyt-Schicht (3) voneinander getrennt sind,
    - Bilden eines ersten Stromkollektors (5a), wobei der erste Stromkollektor (5a) an die erste Elektrode (4a) angeschlossen wird,
    - Bilden einen zweiten Stromkollektors (5b), wobei der zweite Stromkollektor (5b) an die zweite Elektrode (4b) angeschlossen wird, wobei der erste Stromkollektor (5a) und der zweite Stromkollektor (5b) durch die erste Elektrolyt-Schicht (3) elektronisch isoliert sind, wobei das Verfahren **dadurch gekennzeichnet ist,**

    **dass** es die Bildung einer von der ersten Stapelung (1) unterschiedenen zweiten Stapelung (7) umfasst, um einen Wärmemesser zu bilden, wobei die zweite Stapelung (7) mittels der folgenden Verfahrensschritte hergestellt wird:

    - Bilden einer Widerstandsschicht (8) in einer zweiten Elektrolyt-Schicht,
    - Bilden des dritten und vierten Stromkollektors (5c, 5d) in Kontakt mit der Widerstandsschicht (8) und durch die Widerstandsschicht (8) voneinander getrennt,

    **und dass** es umfasst, den dritten und vierten Stromkollektor (5c, 5d) mit einem Steuerkreis (11) zu verbinden, der dazu konfiguriert ist, den Widerstand der Widerstandsschicht (8) zu messen.

17. Verfahren nach Anspruch 16,

    **dadurch gekennzeichnet,**
    **dass** die erste Elektrolyt-Schicht (3) zugleich mit der zweiten Elektrolyt-Schicht gebildet wird.

18. Verfahren nach den Ansprüchen 16 und 17,

    **dadurch gekennzeichnet,**
    **dass** der erste Stromkollektor (5a) zugleich mit dem dritten Stromkollektor (5c) gebildet wird.

19. Verfahren nach Anspruch 18,

    **dadurch gekennzeichnet,**
    **dass** der zweite Stromkollektor (5b) zugleich mit dem vierten Stromkollektor (5d) gebildet wird.

**Claims**

1. Electrochemical device, comprising a first stack (1) of solid thin layers formed on a substrate (2), said first stack (1) forming a battery and comprising:

- a first electrode (4a) and a second electrode (4b) separated by an electronically insulating and ionically conductive first electrolyte layer (3),
- a first current collector (5a) in contact with the first electrode (4a),
- a second current collector (5b) in contact with the second electrode (4b), the first current collector (5a) and second current collector (5b) being electronically isolated by the first electrolyte layer (3),

said device comprising a second stack (7) different from the first stack (1) and forming a thermometer, said second stack (7) comprising:

- a third current collector (5c) and a fourth current collector (5d),
- a resistive layer (8) comprising a second electrolyte layer, the second electrolyte layer being in direct contact with the third current collector (5c) and the fourth current collector (5d) and electrically separating the third current collector (5c) from the fourth current collector (5d), the second electrolyte layer being ionically dissociated from the first electrolyte layer (3),

said device comprising a control circuit (11) configured to measure the resistance of the resistive layer (8).

2. Device (1) according to claim 1, **characterized in that** the second stack (7) is devoid of a positive electrode material in contact with the third current collector (5c) and the second electrolyte layer.

3. Device (1) according to claim 2, **characterized in that** the second stack (7) is devoid of a second electrode material in contact with the fourth current collector (5d) and the second electrolyte layer.

4. Device (1) according to any one of claims 1 to 3, **characterized in that** the first current collector (5a) is common with the third current collector (5c) and **in that** the second current collector (5b) is electronically dissociated from the fourth current collector (5d).

5. Device (1) according to any one of claims 1 to 4, **characterized in that** the first electrolyte layer (3) and the second electrolyte layer are formed by the same electrolyte material.

6. Device (1) according to any one of claims 1 to 5, **characterized in that** the second stack (7) successively comprises, in a direction passing through said second stack and the substrate (2) : the third current collector (5c), resistive layer (8) and fourth current collector (5d).

7. Device (1) according to claim 6, **characterized in that** the third current collector (5c) is partially covered by the resistive layer (8) and **in that** the fourth current collector (5d) partially covers the resistive layer (8) and third current collector (5c), the fourth current collector (5d) leaving at least one side wall of the resistive layer (8) uncovered.

8. Device (1) according to claim 6, **characterized in that** the fourth current collector (5d) leaves a part of the top wall of the resistive layer (8) uncovered.

9. Device (1) according to any one of the foregoing claims, **characterized in that** the resistive layer (8) partially covers a top surface of the third current collector (5c) so as to define an area devoid of overlap in the form of a ring, and **in that** the fourth current collector (5d) completely covers the resistive layer (8), an insulating film (9) separating the third and fourth current collectors (5c, 5d).

10. Device (1) according to any one of the foregoing claims, **characterized in that** the first current collector (5a) is electrically connected to the third current collector (5c).

11. Device (1) according to any one of claims 1 to 3, **characterized in that** the second current collector (5b) is connected to the fourth current collector (5d).

12. Device (1) according to claims 10 and 11, **characterized in that** the battery delivers a current flowing through the resistive layer (8) of the thermometer.

13. Device (1) according to any one of the foregoing claims, **characterized in that** a thermally insulating layer covers the first stack and the second stack.

14. Device (1) according to any one of the foregoing claims, **characterized in that** the control circuit (11) is configured to compare the measured value with at least one threshold to enable or disable charging and/or discharging.

15. Device (1) according to any one of the foregoing claims, **characterized in that** the control circuit (11) is supplied by the battery.

16. Fabrication method of an electrochemical device, **characterized in that** it comprises the following steps to produce a first stack (1) forming a battery:

- forming a first electrode (4a) and a second electrode (4b) separated by an electrically insulating and ionically conductive electrolyte layer (3),
- forming a first current collector (5a), the first current collector (5a) being connected to the first electrode (4a),

- forming a second current collector (5b), the second current collector (5b) being connected to the second electrode (4b), the first current collector (5a) and second current collector (5b) being electronically isolated by the first electrolyte layer (3),

method **characterized in that** it comprises formation of a second stack (7) distinct from the first stack (1) to form a thermometer, the second stack (7) being formed by means of the following steps:

- forming a resistive layer (8) in a second electrolyte layer,
- forming third and fourth current collectors (5c, 5d) in contact with the resistive layer (8) and separated by the resistive layer (8),

and **in that** it comprises connecting the third and fourth current collectors (5c, 5d) to a control circuit (11) configured to measure the resistance of the resistive layer (8).

17. Method according to claim 16, **characterized in that** the first electrolyte layer (3) is formed at the same time as the second electrolyte layer.

18. Method according to one of claims 16 and 17, **characterized in that** the first current collector (5a) is formed at the same time as the third current collector (5c).

19. Method according to claim 18, **characterized in that** the second current collector (5b) is formed at the same time as the fourth current collector (5d).

**FIG 1**

**FIG 2**

**FIG 3**

**FIG 4**

**FIG 5**

**FIG 6**

**FIG 7**

**FIG 8**

**FIG 9**

**FIG 10**

**FIG 11**

**FIG 12**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3009136
- WO 0173864 A
- US 2008032236 A
- EP 1115172 A
- EP 2631966 A
- EP 0913877 A
- DE 10056972
- JP 2014013736 B
- US 2009208815 A
- EP 0902494 A